# EUROPEAN PATENT SPECIFICATION

(11) **EP 3 220 191 B1**
(45) Date of publication and mention of the grant of the patent: **26.02.2020**
(21) Application number: 15793664.2
(22) Date of filing: 27.02.2015
(51) Int. Cl.: G02F 1/1333, G06F 3/041

(54) **TOUCH CONTROL LIQUID CRYSTAL DISPLAY DEVICE AND MANUFACTURING METHOD THEREOF**
BERÜHRUNGSEMPFINDLICHE FLÜSSIGKRISTALL-ANZEIGEVORRICHTUNG UND HERSTELLUNGSVERFAHREN DAFÜR
DISPOSITIF D'AFFICHAGE À CRISTAUX LIQUIDES À COMMANDE TACTILE ET SON PROCÉDÉ DE FABRICATION

(30) Priority: 13.11.2014 CN 201410640401
(43) Date of publication of application: 20.09.2017
(73) Proprietor: BOE Technology Group Co., Ltd., Beijing 100015 (CN); Hefei Xinsheng Optoelectronics Technology Co., Ltd., Xinzhan Industrial Park Hefei Anhui 230012 (CN)
(72) Inventor: HU, Ming, Beijing 100176 (CN); LIU, Guodong, Beijing 100176 (CN)
(74) Representative: Potter Clarkson
(86) International application number: PCT/CN2015/073343
(87) International publication number: WO 2016/074374

(56) References cited:
- CN-A- 102 879 935
- CN-A- 103 294 302
- CN-A- 104 317 091
- CN-U- 203 535 599
- DE-U1-202014 101 698
- JP-A- H06 273 776
- JP-A- 2001 183 671
- US-A- 6 016 134
- US-A1- 2011 267 307

## Description

### BACKGROUND

### Technical Field

The disclosure relates to the field of display technologies, and particularly, to a touch type liquid crystal display apparatus and a manufacturing method for the same.

### Description of the Related Art

A touch display is capable of being operated by touching an icon or a character on the display screen only with user's finger, which enables a more straightforward human-computer interaction. Nowadays, the touch display is widely used in all aspects of social activities.

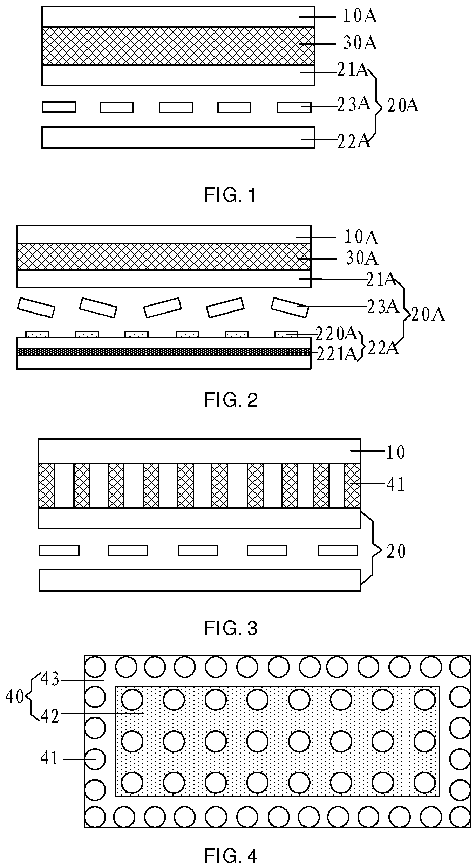

As shown in Fig. 1, the touch display generally comprises a touch screen 10A and a liquid crystal display screen 20A, and the touch screen 10A and the liquid crystal display screen 20A are bonded by adhesive 30A, wherein the liquid crystal display screen 20A generally comprises a color film substrate 21A, an array substrate 22A, and liquid crystals 23A between the color film substrate 21A and the array substrate 22A.

The liquid crystal display screen's display principle is as follows. After the liquid crystal display screen is energized, electrical field is established around the liquid crystal. Under the action of the electrical field, the liquid crystal rotates. Different intensities of the electrical field cause different angles of rotation of the corresponding liquid crystal, which leads to different light transmissions, thereby achieving the displaying of different gray levels. In prior art, an electrical field is generally established once the common electrode and the pixel electrode are energized. The common electrode and the pixel electrode may be located at the same side of the liquid crystals, or may be located at different sides of the liquid crystals.

In case that the common electrode and the pixel electrode are located at the same side of the liquid crystals, the inventor has found that there has been at least the following problem. As shown in Fig. 2, during a bending test of the touch display, once the touch screen 10A is exerted by external force to be deformed, some components of the external force are transferred to the adhesive 30A. However, the adhesive 30A cannot absorb deformation energy of the touch screen 10A nicely, which leads to some components of the external force are transferred to the liquid crystal display screen 20A. In the liquid crystal display screen 20A, the liquid crystal 23A will absorb some of the deformation energy due to existence of the liquid crystal 23A between the array substrate 22A and the color film substrate 21A. Correspondingly, since magnitude of the force transferred to the array substrate 22A is different from that transferred to the color film substrate 21A, rates of deformation of the array substrate 22A and the color film substrate 21A are different. As a result, the electrical field, which is established by the pixel electrode 220A and the common electrode 221A located at the same side of the liquid crystals 23A, is prone to change under the influence of deformations of the array substrate 22A and the color film substrate 21A, which disrupts arrangement of the liquid crystals, thereby leads to light leakage so as to adversely affect the display effect. For example, if a bending test is conducted on the touch display when the touch display is displaying a black or gray picture, a region of the liquid crystal display screen which corresponds to a bent section of the touch display will have a light leakage, as a result, this region will display a white color, which is known as a whitening phenomenon.

At present, a thinned liquid crystal display screen is adopted to solve the whitening phenomenon, although the liquid crystal display screen after the assembling should be thinned during a manufacture of the liquid crystal display screen. This adds an addition process, which increases the production cost. Moreover, the thinning will easily damage the liquid crystal display screen, which reduces the production yield.

DE 20 2014 101698 U1 discloses a touch-sensitive display screen comprising: a display screen; a touch-sensitive screen disposed on this display screen; a first adhesive applied between the display screen and the touch-sensitive screen and on the periphery of the touch-sensitive display screen; a surface adhesive applied between the display panel and the touch screen and filling a gap formed with the first adhesive; and a second adhesive applied between the display screen and the touch screen and externally around the gap formed with the first adhesive. US 6 016 134 A discloses a liquid crystal display device having a transparent input touch panel provided on a liquid crystal display panel, including a transparent sheet layer in the region corresponding to an effective area of the transparent input touch panel and the picture element area of liquid crystal display panel between the transparent input touch panel and the liquid crystal display panel; and at least one of a cohesive sheet layer, an adhesive sheet layer and a spacer of coherent strength larger than that of the transparent sheet layer provided in the plane of the transparent sheet layer around at least a portion a periphery of the transparent sheet layer..

### SUMMARY

Embodiments of the present invention provide a touch type liquid crystal display apparatus, which has a reduced production cost, and effectively alleviates the whitening phenomenon of the touch display, compared to the prior art.

Embodiments of the present invention also provide a method for manufacturing a touch type liquid crystal display apparatus, which has a reduced production cost, and effectively alleviates the whitening phenomenon of the touch display, compared to the prior art.

In order to achieve the abovementioned objects, the following technical solutions are adopted in these embodiments of the present invention.

Embodiments of the present invention provide a touch type liquid crystal display apparatus as defined in claim 1. The touch type liquid crystal display apparatus comprises a touch screen, a liquid crystal display screen, and an adhesion layer between the touch screen and the liquid crystal display screen. The adhesion layer comprises a plurality of adhesion parts being not in contact with each other, and the adhesion parts are in contact with the touch screen and the liquid crystal display screen, respectively, for fixation of the touch screen with the liquid crystal display screen.

Embodiments of the present invention provide a method for manufacturing a touch type liquid crystal display apparatus as defined in claim 7. The method comprises steps of:
forming a touch screen and a liquid crystal display screen, respectively; forming an adhesion layer on one of the touch screen and the liquid crystal display screen, and implementing a precuring treatment on the adhesion layer, wherein the adhesion layer comprises a plurality of adhesion parts being not in contact with each other; assembling the touch screen with the liquid crystal display screen; and, implementing a curing treatment on the adhesion layer so that the touch screen is fixed with the liquid crystal display screen through the adhesion parts.

In the touch type liquid crystal display apparatus according to embodiments of the present invention, the adhesion layer is disposed between the touch screen and the liquid crystal display screen. The adhesion layer comprises a plurality of adhesion parts being not in contact with each other, and the adhesion parts are in contact with the touch screen and the liquid crystal display screen, respectively, for fixation of the touch screen with the liquid crystal display screen. Once an external force is exerted on the touch screen so that the touch screen is deformed, since the adjacent adhesion parts are not in contact with each other, on one hand, deformation energy from the touch screen is dispersed to these independent adhesion parts and the deformation energy to be absorbed by each of the adhesion parts becomes small; and on the other hand, existence of gaps between the adjacent adhesion parts makes these adhesion parts to have enhanced ability of absorbing deformation energy. As a result, the adhesion parts are capable of absorbing most of deformation energy from the touch screen, while only a little of deformation energy will be transferred to the liquid crystal display screen, which effectively alleviates the whitening phenomenon of the touch display. In addition, in such display apparatus, no thinning process is needed to be implemented on the liquid crystal display screen, which reduces a production cost compared to the prior art.

### BRIEF DESCRIPTION OF THE DRAWINGS

In order to illustrate clearly the technical solutions in embodiments of the present invention or in the prior art, the accompanying drawings which will be used during describing the embodiments or the prior art are provided and briefly described herein. Obviously, the accompanying drawings for the below description are presented merely for some embodiments of the present invention, and those skilled in the art will easily obtain other accompanying drawings based on the below drawings without involving any inventive labour.
Fig. 1 is a structural schematic view of a touch type liquid crystal display apparatus in prior art;
Fig. 2 is a structural schematic view of a touch type liquid crystal display apparatus in prior art, when being suffered from external force;
Fig. 3 is a structural schematic view of a touch type liquid crystal display apparatus according to an embodiment of the present invention;
Fig. 4 is a top view of an adhesion layer shown in Fig. 3;
Fig. 5 is a flow diagram of a method for manufacturing a touch type liquid crystal display apparatus according to an embodiment of the present invention; and
Fig. 6 is a flow diagram of a method for manufacturing an adhesion layer in a touch type liquid crystal display apparatus according to an embodiment of the present invention.

### Reference Signs

10/10A-touch screen; 20/20A-liquid crystal display screen; 21A-color film substrate; 22A-array substrate; 220A-pixel electrode; 221A-common electrode; 23A-liquid crystal; 30A-adhesive; 40-adhesion layer; 41-adhesion part; 42-first region; and, 43-second region.

### DETAILED DESCRIPTION OF THE EMBODIMENTS

A clear and complete description of technique solutions of these embodiments of the present invention will be provided in conjunction with abovementioned drawings in the embodiments. Obviously, the depicted embodiments are merely some of these embodiments of the present invention, instead of all of these embodiments of the present invention. Any other embodiments obtained, on the basis of the embodiments of the present invention without involving any inventive labour, by those skilled in the art fall within the scope of the present invention.

Embodiments of the present invention provide a touch type liquid crystal display apparatus. Referring to Figs. 3 and 4, the touch type liquid crystal display apparatus comprises a touch screen 10, a liquid crystal display screen 20, and an adhesion layer 40 between the touch screen 10 and the liquid crystal display screen 20. The adhesion layer 40 comprises a plurality of adhesion parts 41 being not in contact with each other, and the adhesion parts 41 are in contact with the touch screen 10 and the liquid crystal display screen 20, respectively 10, for fixation of the touch screen 10 with the liquid crystal display screen 20.

In the abovementioned touch type liquid crystal display apparatus, the adhesion parts just need to fix the touch screen with the liquid crystal display screen. Quantity, material, size, height and shape of the adhesion parts are not limited in the present invention, and they may be determined in accordance with practical requirements. In addition, the present invention also does not make any limitations on types of the liquid crystal display screen, as long as the common electrode and the pixel electrode of the liquid crystal display screen are located at the same side of the liquid crystals. For example, it may be an Advanced Super Dimension Switch (ADS) type liquid crystal display screen, or else may be an In-Plane Switching (IPS) type liquid crystal display screen, and so on.

In the touch type liquid crystal display apparatus according to embodiments of the present invention, the adhesion layer is disposed between the touch screen and the liquid crystal display screen. The adhesion layer comprises a plurality of adhesion parts being not in contact with each other, and the adhesion parts are in contact with the touch screen and the liquid crystal display screen, respectively , for fixation of the touch screen with the liquid crystal display screen. Once an external force is exerted on the touch screen so that the touch screen is deformed, since the adjacent adhesion parts are not in contact with each other, on one hand, deformation energy from the touch screen is dispersed to these independent adhesion parts and the deformation energy to be absorbed by each of the adhesion parts becomes small; and on the other hand, existence of gaps between the adjacent adhesion parts makes these adhesion parts to have enhanced ability of absorbing deformation energy. As a result, the adhesion parts are capable of absorbing most of deformation energy from the touch screen, while only a little of deformation energy will be transferred to the liquid crystal display screen, which effectively alleviates the whitening phenomenon of the touch display. In addition, in such display apparatus, no thinning process is needed to be implemented on the liquid crystal display screen, which reduces a production cost.

Moreover, for saving of the material, the adhesion parts each have a height of 0.15mm-0.5mm.

Optionally, in order to disperse the deformation energy from the touch screen evenly, a section, along a direction parallel to the liquid crystal display screen, of each of the adhesion parts may be in the shape of circle, ellipse or rectangle.

Optionally, intervals between any two adjacent adhesion parts in a same direction are equal to one another. As a result, uniform distribution of the adhesion parts is more beneficial to fixation between the touch screen and the liquid crystal display screen. Meanwhile, it also evenly disperses the deformation energy from the touch screen.

It should be noted that, in the adhesion layer, these adhesion parts may have the same or different sizes and shapes, and they are not limited specifically herein. In order to reduce the processing difficulty, all the adhesion parts preferably have the same size and shape.

Moreover, in order to fix the margin of the touch screen with that of the liquid crystal display screen in a better manner, referring to Fig. 4, the adhesion layer 10 comprises a first region 42 and a second region 43 adjoining each other, wherein the second region 43 is located at a margin of the liquid crystal display screen, and, a density of distribution of the adhesion parts 41 within the second region 43 is greater than a density of distribution of the adhesion parts 41 within the first region 42.

It should be noted that areas, sizes and shapes of the first and second regions are not limited herein, and they may be determined in accordance with practical requirements. The first region and the second region may have the same or different shapes, and, preferably they have the same shape, which is more beneficial to the processing and manufacturing.

The abovementioned density of distribution denotes a ratio of a sum of areas occupied by these adhesion parts to an area of the region where they are located. For example, a density of distribution of the adhesion parts within the first region denotes a ratio of a sum of areas occupied by these adhesion parts within the first region to an area of the first region. In like manner, a density of distribution of the adhesion parts within the second region denotes a ratio of a sum of areas occupied by these adhesion parts within the second region to an area of the second region.

In addition, optionally, the second region may adjoin only a portion of the first region, or may surround the first region. The latter is preferred, as all the margins of the touch screen and the liquid crystal display screen will be fixed in a better manner.

Moreover, for savings of the material and reduction of the cost, the second region has a width of 3mm-8mm. In particular, the width may be determined according to size of the display apparatus.

Optionally, the density of distribution of the adhesion parts within the first region is 40%-70%. In this way, the adhesion parts are distributed uniformly within the first region, which is beneficial to dispersal of the deformation energy from the touch screen.

Optionally, the density of distribution of the adhesion parts within the second region is 70%-100%. In this way, it is beneficial to fixation of the touch screen with the liquid crystal display screen, while saving the material.

An explanation will be given by taking a specific embodiment as an example hereafter. For example, in a 14 inch touch notebook computer, the adhesion parts each have a height of 0.25mm, a section, along a direction parallel to the liquid crystal display screen, of each of the adhesion parts is in the shape of circle having the diameter of 4.0mm, a density of distribution of the adhesion parts within the first region is 52.5%, a density of distribution of the adhesion parts within the second region is 90%, the second region has a width of 5.0mm, and all the adhesion parts have the same size and shape. Whitening phenomenon of this touch notebook computer is greatly alleviated and this touch notebook computer has reduced cost.

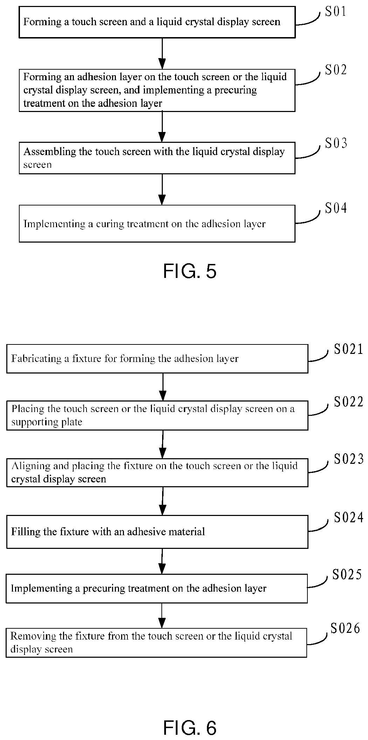

Embodiments of the present invention provide a method for manufacturing a touch type liquid crystal display apparatus. Referring to Fig. 5, the method comprises:
a step S01 of forming a touch screen and a liquid crystal display screen, respectively;
a step S02 of forming an adhesion layer on one of the touch screen and the liquid crystal display screen, and implementing a precuring treatment on the adhesion layer, wherein the adhesion layer comprises a plurality of adhesion parts being not in contact with each other;
a step S03 of assembling the touch screen with the liquid crystal display screen; and
a step S04 of implementing a curing treatment on the adhesion layer so that the touch screen is fixed with the liquid crystal display screen through the adhesion parts.

In the above manufacturing method, the method for manufacturing the touch screen and the liquid crystal display screen is the same as that in the prior art, and will not be described for the sake of brevity herein. In addition, sequence of formations of the touch screen and of the liquid crystal display screen is not limited herein. For example, the touch screen and the liquid crystal display screen may be formed simultaneously, or, the liquid crystal display screen is firstly formed and then the touch screen is formed; or else, the touch screen is firstly formed and then the liquid crystal display screen is formed.

With the method for manufacturing the touch type liquid crystal display apparatus according to embodiments of the present invention, the adhesion layer is formed between the touch screen and the liquid crystal display screen. The adhesion layer comprises a plurality of adhesion parts being not in contact with each other, and the adhesion parts are in contact with the touch screen and the liquid crystal display screen, respectively, for fixation of the touch screen with the liquid crystal display screen. Once an external force is exerted on the touch screen so that the touch screen is deformed, since the adjacent adhesion parts are not in contact with each other, on one hand, deformation energy from the touch screen is dispersed to these independent adhesion parts and the deformation energy to be absorbed by each of the adhesion parts becomes small; on the other hand, existence of gaps between the adjacent adhesion parts makes these adhesion parts to have enhanced ability of absorbing deformation energy. As a result, the adhesion parts are capable of absorbing most of deformation energy from the touch screen, while only a little of deformation energy will be transferred to the liquid crystal display screen, which effectively alleviates the whitening phenomenon of the touch display. In addition, in such manufacturing method, no thinning process is needed to be implemented on the liquid crystal display screen, which reduces production cost.

Moreover, in the abovementioned method, the step of forming an adhesion layer and implementing the precuring treatment on the adhesion layer may further comprise the following steps, as shown in Fig. 6.

In a step S021, a fixture for forming the adhesion layer is fabricated. In particular, the corresponding fixture may be fabricated in accordance with size, height, shape, density, and the like of the adhesion parts. In some embodiment of the present invention, the adhesion parts each have a height of 0.15mm-0.5mm. A section, along a direction parallel to the liquid crystal display screen, of each of the adhesion parts is in the shape of circle, ellipse or rectangle. Intervals between any two adjacent adhesion parts in a same direction are equal to one another. Moreover, the adhesion layer may comprise first and second regions adjoining each other, wherein the second region is located at a margin of the liquid crystal display screen, and, a density of distribution of the adhesion parts within the second region is greater than a density of distribution of the adhesion parts within the first region. The second region may adjoin only a portion of the first region, or may surround the first region. The first region and the second region may have the same or different shapes. The second region has a width of 3mm-8mm. The density of distribution of the adhesion parts within the first region is 40%-70%; and, the density of distribution of the adhesion parts within the second region is 70%-100%.

In a step S022, the touch screen or the liquid crystal display screen is placed on a supporting plate. In particular, the supporting plate may be, for example, a platform of a laminating machine.

In a step S023, the fixture is aligned and placed on the touch screen or the liquid crystal display screen.

In a step S024, the fixture is filled with adhesive material. In particular, the adhesive material may be aqueous adhesive or other adhesives.

In a step S025, a precuring treatment is implemented on the adhesion layer. In particular, for example, the precuring treatment on the adhesion layer may be implemented by use of ultraviolet irradiation.

In a step S026, the fixture is removed from the touch screen or the liquid crystal display screen.

## Claims

1. A touch type liquid crystal display apparatus, comprising a touch screen (10), a liquid crystal display screen (20) in which a pixel electrode and a common electrode are located at a same side of liquid crystals of the liquid crystal display screen (20), and an adhesion layer between the touch screen and the liquid crystal display screen (20), wherein the adhesion layer comprises a plurality of adhesion parts (41) being not in contact with each other, and the adhesion parts are in contact with the touch screen and the liquid crystal display screen, respectively, for fixation of the touch screen with the liquid crystal display screen;
the adhesion layer comprises first and second regions (42, 43) adjoining each other, wherein the second region is located at a margin of the liquid crystal display screen, and, a density of distribution of the adhesion parts within the second region is greater than a density of distribution of the adhesion parts within the first region, the density of distribution denoting the ratio of the sum of areas occupied by the adhesion parts in the respective region to the area of said region.

2. The display apparatus of claim 1, wherein the adhesion parts each have a height of 0.15mm-0.5mm;
a section, along a direction parallel to the liquid crystal display screen, of each of the adhesion parts is in the shape of circle, ellipse or rectangle; and
intervals between any two adjacent adhesion parts in a same direction are equal to one another.

3. The display apparatus of claim 1, wherein the first region is surrounded by the second region.

4. The display apparatus of claim 3, wherein a shape of the second region is the same as a shape of the first region.

5. The display apparatus of claim 4, wherein the second region has a width of 3mm-8mm.

6. The display apparatus of claim 1, wherein the density of distribution of the adhesion parts within the first region is 40%-70%, and
the density of distribution of the adhesion parts within the second region is 70%-100%.

7. A method of manufacturing a touch type liquid crystal display apparatus, comprising steps of:
forming a touch screen (10) and a liquid crystal display screen (20) in which a pixel electrode and a common electrode are located at a same side of liquid crystals of the liquid crystal display screen (20), respectively;
forming an adhesion layer on one of the touch screen and the liquid crystal display screen, and implementing a precuring treatment on the adhesion layer, wherein the adhesion layer comprises a plurality of adhesion parts (41) being not in contact with each other;
assembling the touch screen with the liquid crystal display screen; and
implementing a curing treatment on the adhesion layer so that the touch screen is fixed with the liquid crystal display screen through the adhesion parts;
wherein the adhesion layer comprises first and second regions (42, 43) adjoining each other, wherein the second region is located at a margin of the liquid crystal display screen, and, a density of distribution of the adhesion parts within the second region is greater than a density of distribution of the adhesion parts within the first region, the density of distribution denoting the ratio of the sum of areas occupied by the adhesion parts in the respective region to the area of said region.

8. The method of claim 7, wherein the step of forming an adhesion layer and implementing the precuring treatment on the adhesion layer further comprises steps of:
fabricating a fixture for forming the adhesion layer;
placing the touch screen or the liquid crystal display screen on a supporting plate;
aligning and placing the fixture on the touch screen or the liquid crystal display screen;
filling the fixture with an adhesive material;
implementing a precuring treatment on the adhesion layer; and
removing the fixture from the touch screen or the liquid crystal display screen.

9. The method of claim 7, wherein the adhesion parts each have a height of 0.15mm-0.5mm,
a section, along a direction parallel to the liquid crystal display screen, of each of the adhesion parts is in the shape of circle, ellipse or rectangle, and
intervals between any two adjacent adhesion parts in a same direction are equal to one another.

10. The method of claim 7, wherein the first region is surrounded by the second region.

11. The method of claim 10, wherein a shape of the second region is the same as a shape of the first region.

12. The method of claim 11, wherein the second region has a width of 3mm-8mm.

13. The method of claim 7, wherein the density of distribution of the adhesion parts within the first region is 40%-70%; and, the density of distribution of the adhesion parts within the second region is 70%-100%.

## Patentansprüche

1. Flüssigkristall-Anzeigevorrichtung vom Berührungstyp, die einen Berührungsbildschirm (10), einen Flüssigkristall-Anzeigebildschirm (20), in dem sich eine Pixelelektrode und eine gemeinsame Elektrode auf derselben Seite der Flüssigkristalle des Flüssigkristall-Anzeigebildschirms (20) befinden, und eine Haftschicht zwischen dem Berührungsbildschirm und dem Flüssigkristall-Anzeigebildschirm (20) umfasst, wobei die Haftschicht mehrere Haftteile (41) umfasst, die nicht miteinander in Kontakt sind, und die Haftteile jeweils mit dem Berührungsbildschirm und dem Flüssigkristall-Anzeigebildschirm in Kontakt sind, um den Berührungsbildschirm mit dem Flüssigkristall-Anzeigebildschirm zu fixieren;
die Haftschicht erste und zweite Bereiche (42, 43), die aneinander angrenzen, umfasst, wobei der zweite Bereich sich an einem Rand des Flüssigkristall-Anzeigebildschirms befindet und wobei eine Verteilungsdichte der Haftteile innerhalb des zweiten Bereichs größer ist als eine Verteilungsdichte der Haftteile innerhalb des ersten Bereichs, wobei die Verteilungsdichte das Verhältnis der Summe der von den Haftteilen in dem jeweiligen Bereich belegten Flächen zu der Fläche des Bereichs angibt.

2. Anzeigevorrichtung nach Anspruch 1, wobei die Haftteile jeweils eine Höhe von 0,15 mm - 0,5 mm aufweisen;
ein Abschnitt von jedem der Haftteile entlang einer Richtung parallel zum Flüssigkristall-Anzeigebildschirm die Form eines Kreises, einer Ellipse oder eines Rechtecks hat, und
Abstände zwischen zwei beliebigen angrenzenden Haftteilen in gleicher Richtung einander gleich sind.

3. Anzeigevorrichtung nach Anspruch 1, wobei der erste Bereich von dem zweiten Bereich umgeben ist.

4. Anzeigevorrichtung nach Anspruch 3, wobei eine Form des zweiten Bereichs die gleiche ist wie eine Form des ersten Bereichs.

5. Anzeigevorrichtung nach Anspruch 4, wobei der zweite Bereich eine Breite von 3 mm - 8 mm aufweist.

6. Anzeigevorrichtung nach Anspruch 1, wobei die Verteilungsdichte der Haftteile innerhalb des ersten Bereiches 40 % - 70 % beträgt, und
die Verteilungsdichte der Haftteile innerhalb des zweiten Bereiches 70 % - 100 % beträgt.

7. Verfahren zum Herstellen einer Flüssigkristall-Anzeigevorrichtung vom Berührungstyp, das die folgenden Schritte umfasst:
Bilden eines Berührungsbildschirms (10) und eines Flüssigkristall-Anzeigebildschirms (20), in denen sich eine Pixelelektrode und eine gemeinsame Elektrode jeweils auf derselben Seite der Flüssigkristalle des Flüssigkristall-Anzeigebildschirms (20) befinden;
Bilden einer Haftschicht auf einem von dem Berührungsbildschirm und dem Flüssigkristall-Anzeigebildschirm und Durchführen einer Vorhärtungsbehandlung auf der Haftschicht, wobei die Haftschicht mehrere Haftteile (41) umfasst, die nicht miteinander in Kontakt sind;
Zusammenbau des Berührungsbildschirms mit dem Flüssigkristall-Anzeigebildschirm; und
Durchführen einer Aushärtungsbehandlung auf der Haftschicht, sodass der Berührungsbildschirm mit dem Flüssigkristall-Anzeigebildschirm durch die Haftteile fixiert wird;
wobei die Haftschicht erste und zweite Bereiche (42, 43) umfasst, die aneinander angrenzen, wobei sich der zweite Bereich an einem Rand des Flüssigkristall-Anzeigebildschirms befindet und wobei eine Verteilungsdichte der Haftteile innerhalb des zweiten Bereichs größer ist als eine Verteilungsdichte der Haftteile innerhalb des ersten Bereichs, wobei die Verteilungsdichte das Verhältnis der Summe der von den Haftteilen in dem jeweiligen Bereich belegten Flächen zu der Fläche des Bereichs angibt.

8. Verfahren nach Anspruch 7, wobei der Schritt des Bildens einer Haftschicht und des Durchführens der Vorhärtungsbehandlung auf der Haftschicht ferner folgende Schritte umfasst:
Fertigen einer Befestigung für das Bilden der Haftschicht;
Platzieren des Berührungsbildschirms oder des Flüssigkristall-Anzeigebildschirms auf einer Trägerplatte;
Ausrichten und Platzieren der Befestigung auf dem Berührungsbildschirm oder dem Flüssigkristall-Anzeigebildschirm;
Befüllen der Befestigung mit einem Haftmaterial;
Durchführen einer Vorhärtungsbehandlung auf der Haftschicht; und
Entfernen der Befestigung vom Berührungsbildschirm oder vom Flüssigkristall-Anzeigebildschirm.

9. Verfahren nach Anspruch 7, wobei die Haftteile jeweils eine Höhe von 0,15 mm - 0,5 mm aufweisen,
ein Abschnitt von jedem der Haftteile entlang einer Richtung parallel zum Flüssigkristall-Anzeigebildschirm die Form eines Kreises, einer Ellipse oder eines Rechtecks hat, und
Abstände zwischen zwei beliebigen angrenzenden Haftteilen in gleicher Richtung einander gleich sind.

10. Verfahren nach Anspruch 7, wobei der erste Bereich von dem zweiten Bereich umgeben ist.

11. Verfahren nach Anspruch 10, wobei eine Form des zweiten Bereichs die gleiche ist wie eine Form des ersten Bereichs.

12. Verfahren nach Anspruch 11, wobei der zweite Bereich eine Breite von 3 mm - 8 mm aufweist.

13. Verfahren nach Anspruch 7, wobei die Verteilungsdichte der Haftteile innerhalb des ersten Bereichs 40 % - 70 % beträgt und die Verteilungsdichte der Haftteile innerhalb des zweiten Bereichs 70 % - 100 % beträgt.

## Revendications

1. Appareil d'affichage à cristaux liquides de type tactile, comprenant un écran tactile (10), un écran d'affichage à cristaux liquides (20) dans lequel une électrode de pixel et une électrode commune sont situées d'un même côté des cristaux liquides de l'écran d'affichage à cristaux liquides (20), et une couche d'adhésion entre l'écran tactile et l'écran d'affichage à cristaux liquides (20), la couche d'adhésion comprenant une pluralité de parties d'adhésion (41) n'étant pas en contact les unes avec les autres, et les parties d'adhésion étant en contact avec l'écran tactile et l'écran d'affichage à cristaux liquides respectivement, pour la fixation de l'écran tactile à l'écran d'affichage à cristaux liquides ;
la couche d'adhésion comprenant des première et seconde régions (42, 43) contiguës l'une par rapport à l'autre, la seconde région étant située à une marge de l'écran d'affichage à cristaux liquides, et une densité de distribution des parties d'adhésion dans la seconde région étant supérieure à une densité de distribution des parties d'adhésion dans la première région, la densité de distribution indiquant le rapport de la somme des zones occupées par les parties d'adhésion dans la région respective à la zone de ladite région.

2. Appareil d'affichage selon la revendication 1, dans lequel les parties d'adhésion ont chacune une hauteur comprise entre 0,15 et 0,5 mm ;
une section, le long d'une direction parallèle à l'écran d'affichage à cristaux liquides, de chacune des parties d'adhésion ayant la forme d'un cercle, d'une ellipse ou d'un rectangle ; et
les intervalles entre deux parties d'adhésion adjacentes dans une même direction étant égaux entre eux.

3. Appareil d'affichage selon la revendication 1, dans lequel la première région est entourée par la seconde région.

4. Appareil d'affichage selon la revendication 3, dans lequel la forme de la seconde région est la même que la forme de la première région.

5. Appareil d'affichage selon la revendication 4, dans lequel la seconde région a une largeur comprise entre 3 et 8 mm.

6. Appareil d'affichage selon la revendication 1, dans lequel la densité de distribution des parties d'adhésion dans la première région est comprise entre 40 et 70 %, et
la densité de distribution des parties d'adhésion dans la seconde région est comprise entre 70 et 100 %.

7. Procédé de fabrication d'un appareil d'affichage à cristaux liquides de type tactile, comprenant les étapes consistant à :
former un écran tactile (10) et un écran d'affichage à cristaux liquides (20) dans lequel une électrode de pixel et une électrode commune sont situées sur un même côté de cristaux liquides de l'écran d'affichage à cristaux liquides (20), respectivement ;
former une couche d'adhésion sur l'écran tactile et/ou l'écran d'affichage à cristaux liquides, et mettre en œuvre un traitement de prédurcissement sur la couche d'adhésion, la couche d'adhésion comprenant une pluralité de parties d'adhésion (41) n'étant pas en contact les unes avec les autres ;
assembler l'écran tactile sur l'écran d'affichage à cristaux liquides ; et à
mettre en œuvre un traitement de durcissement sur la couche d'adhésion de sorte que l'écran tactile soit fixé à l'écran d'affichage à cristaux liquides à travers les parties d'adhésion ;
la couche d'adhésion comprenant des première et seconde régions (42, 43) contiguës l'une par rapport à l'autre, la seconde région étant située à une marge de l'écran d'affichage à cristaux liquides, et une densité de distribution des parties d'adhésion dans la seconde région étant supérieure à une densité de distribution des parties d'adhésion dans la première région, la densité de distribution indiquant le rapport de la somme des zones occupées par les parties d'adhésion dans la région respective à la zone de ladite région.

8. Procédé selon la revendication 7, dans lequel l'étape de formation d'une couche d'adhésion et de mise en œuvre du traitement de prédurcissement sur la couche d'adhésion comprend en outre les étapes consistant à :
fabriquer un accessoire permettant de former la couche d'adhésion ;
placer l'écran tactile ou l'écran d'affichage à cristaux liquides sur une plaque de support ;
aligner et placer l'accessoire sur l'écran tactile ou l'écran d'affichage à cristaux liquides ;
remplir l'accessoire d'un matériau adhésif ;
mettre en œuvre un traitement de prédurcissement sur la couche d'adhésion ; et à retirer l'accessoire de l'écran tactile ou de l'écran d'affichage à cristaux liquides.

9. Procédé selon la revendication 7, dans lequel les parties d'adhésion ont chacune une hauteur comprise entre 0,15 et 0,5 mm,
une section, le long d'une direction parallèle à l'écran d'affichage à cristaux liquides, de chacune des parties d'adhésion ayant la forme d'un cercle, d'une ellipse ou d'un rectangle, et
les intervalles entre deux parties d'adhésion adjacentes dans une même direction étant égaux entre eux.

10. Procédé selon la revendication 7, dans lequel la première région est entourée par la seconde région.

11. Procédé selon la revendication 10, dans lequel la forme de la seconde région est la même que la forme de la première région.

12. Procédé selon la revendication 11, dans lequel la seconde région a une largeur comprise entre 3 et 8 mm.

13. Procédé selon la revendication 7, dans lequel la densité de distribution des parties d'adhésion dans la première région est comprise entre 40 et 70 % ; et la densité de distribution des parties d'adhésion dans la seconde région est comprise entre 70 et 100 %.
